(19) Europäisches Patentamt
European Patent Office
Office européen des brevets

(11) Publication number: **0 405 084 A2**

(12) # EUROPEAN PATENT APPLICATION

(21) Application number: 90107696.8

(51) Int. Cl.5: C04B 24/26

(22) Date of filing: 24.04.90

(30) Priority: 30.06.89 JP 168890/89
05.03.90 JP 53276/90

(43) Date of publication of application:
02.01.91 Bulletin 91/01

(84) Designated Contracting States:
AT BE CH DE DK ES FR GB IT LI NL SE

(71) Applicant: LION CORPORATION
3-7, Honjo 1-chome
Sumida-ku Tokyo(JP)

(72) Inventor: Miyakawa, Jyunpei
14-18, Nishi-waseda 2-chome, Shinjuku-ku
Tokyo(JP)
Inventor: Morita, Hiroshi
5-4-801, Takasu 3-chome, Chiba-shi
Chiba(JP)
Inventor: Ito, Atsushi
Lion Corporation Yatsu-ryo, 16-11, Yatsu
6-chome
Narashino-shi, Chiba(JP)

(74) Representative: Henkel, Feiler, Hänzel &
Partnerner
Möhlstrasse 37
D-8000 München 80(DE)

(54) **Additive for cement mortar and/or concrete.**

(57) An additive for cement mortar and/or concrete comprising a polymer latex, as an essential component, containing polymer fine particles having a core-shell type differentiated layer structure, wherein the weight ratio of the unsaturated monomers constituting the core portion and the shell portion is 10/90 to 90/10, and wherein the weight composition of the unsaturated monomers in the core portion is preferably:

| | |
|---|---|
| alkyl acrylate with alkyl group having 1 to 8 carbon atoms | 55 - 100% by weight |
| alkyl methacrylate with alkyl group having 1 to 4 carbon atoms | 0 - 45% by weight |
| crosslinking agent | 0 - 5% by weight |

and the weight composition of the unsaturated monomers in the shell portion is, preferably:

| | |
|---|---|
| alkyl acrylate with alkyl group having 1 to 8 carbon atoms | 5 - 49.9% by weight |
| alkyl methacrylate with alkyl group having 1 to 4 carbon atoms | 45 - 90% by weight |
| ethylenically unsaturated carboxylic acid or its salt | 0.1 - 5% by weight |
| crosslinking agent | 0 - 5% by weight |

EP 0 405 084 A2

# ADDITIVE FOR CEMENT MORTAR AND/OR CONCRETE

## BACKGROUND OF THE INVENTION

### 1. Field of the Invention

The present invention relates to a durable cement mortar and a durable concrete containing a polymer latex comprising core-shell type differentiated layer polymer fine particles as the essential component.

### 2. Description of the Related Art

In a known prior art method, a polymer latex is used as the additive for improving the durability of cement mortar and/or concrete by preventing cracks, raising the water resistance, abrasion resistance, and chemical resistance, and preventing neutralization. In this method of the prior art, although the various properties and the appearance of the above-mentioned water curable inorganic composition can be improved to some extent, the above requirements are not sufficiently satisfied.

More specifically, in a cement mortar and/or concrete containing a polymer latex having a uniform phase, the water absorption inhibition and neutralization inhibition are poor, although these are important when seeking a higher durability, and further, there is little improvement of the flexural strength, which is a weak point of a hardened product.

## SUMMARY OF THE INVENTION

Accordingly, the objects of the present invention are to eliminate the above-mentioned disadvantages of the prior art and to provide a novel additive which is different from the additive of the prior art mentioned above and can provide a cement mortar and/or concrete (including a cement-hardened product comprising only cement solidified with water, and not containing a fine aggregate or coarse aggregate) which has a high flexural strength and superior water resistance, durability, and neutralization inhibition.

Other objects and advantages of the present invention will be apparent from the following description.

In accordance with the present invention, there is provided an additive for cement mortar and/or concrete comprising a polymer latex, as an essential component, containing polymer fine particles, having core-shell type differentiated layer structures, wherein the weight ratio of the unsaturated monomers constituting the core portion and the shell portion is 90/10 to 10/90.

## DESCRIPTION OF THE PREFERRED EMBODIMENTS

The core-shell type differentiated layer structure is a multi-layer structure in which the inner portion of the fine particle in the polymer latex particles is soft and the outer portion is hard, at a certain temperature.

The first specific feature of the polymer latex according to the present invention is the core-shell type differentiated layer structure.

The cement mortar and/or concrete containing a polymer latex having a uniform phase as the additive, as in the prior art, has a poor water absorption inhibition and neutralization inhibition, and further, has a low flexural strength. The cement mortar and/or concrete containing the polymer latex having the core-shell type differentiated layer structure according to the present invention, however, has a good water absorption and neutralization inhibition, and the flexural strength thereof is greatly improved. The reason for this effect has not been clarified as yet, but may be considered due to the following. In general, a uniform system polymer latex with a low Tg has a good film forming property, but a mutual coalescence of the particles will undesirably occur. On the other hand, the core-shell type polymer latex of the present invention has a shell having a high Tg, and therefore, suffers very little from a mutual coalescence of the particles, and further, provides a polymer latex with a good film forming property.

The second specific feature of the polymer latex according to the present invention is that the weight ratio of the unsaturated monomers constituting the core portion and the shell portion is within the range of from 90/10 to 10/90, preferably from 35/65 to 90/10.

If the weight ratio of the unsaturated monomers constituting the core portion and the shell portion exceeds 90/10, due to destruction of the different layer structure, the compression strength, flexural strength, and water reduction effect cannot be fully exhibited, and if less than 10/90, the improvements of the water absorption and neutralization inhibition are not satisfactory.

The polymer latex, which is the essential component of the additive for cement mortar and/or concrete, is characterized in the two points as mentioned above, but preferably further has a glass transition point (Tg) of the shell portion, calculated by the weight fraction method, of the polymer latex of 0 to 50 °C and a Tg of the core portion thereof of 10 °C or lower.

In general, the Tg of a polymer latex can be determined by the weight fraction method, from the following formula, if the Tg's of the homopolymers of the unsaturated monomers alone, which are the constituents of the polymer latex, are known.

$$\frac{1}{Tg(T)} \fallingdotseq \frac{W_A}{Tg(T)_A} + \frac{W_B}{Tg(T)_B}$$

$W_A$: weight fraction of component A

$W_B$: weight fraction of component B

$Tg(T)_A$: Tg of component A (absolute temperature)

$Tg(T)_B$: Tg of component B (absolute temperature)

The glass transition temperature (Tg) of the polymer at the shell portion is 0 to 50 °C, preferably 5 to 40 °C. If the Tg exceeds 50 °C, the film forming property of the polymer is poor, and thus the binder effect of the polymer is inferior, and further, even when formed into a film, the polymer becomes too stiff, whereby the improvement of the flexural strength of a cement hardened product is small, and the improvements of the absorption and neutralization inhibition are unsatisfactory. If the Tg is lower than 0 °C, the reduction of the amount of used W/C is unsatisfactory.

Further, the polymer latex to be used in the present invention preferably has a crosslinked structure internally of the polymer particles, to improve the strength and the water resistance of the cement-hardened product.

The cement mortar and/or concrete of the present invention can be obtained by an emulsion polymerization of the unsaturated monomer, which is the essential component of the additive for the cement mortar and/or concrete.

As the unsaturated monomer to be used in the present invention, there can be included acrylic acid esters having an ethylenic double bond (e.g., ethyl acrylate, butyl acrylate, octyl acrylate); methacrylic acid esters (e.g., methyl acrylate, ethyl methacrylate, butyl methacrylate, octyl methacrylate); styrenes such as styrene, α-methylstyrene and the like; dienes such as butadiene, isoprene and the like; vinyls such as vinyl acetate, vinyl propionate and the like; and nitriles such as acrylonitrile, α-methylacrylonitrile and the like, but preferably (meth)acrylic acid esters are used, to obtain a cement mortar and/or concrete having a good durability and weathering resistance.

The unsaturated monomer primarily used for the core portion may be ethyl acrylate, butyl acrylate, octyl acrylate, 2-ethylhexyl acrylate, but particularly preferably, is ethyl acrylate, butyl acrylate, or 2-ethylhexyl acrylate.

The unsaturated monomer primarily used for the shell portion may be methyl methacrylate, ethyl methacrylate, butyl methacrylate, but particularly preferably, is methyl methacrylate.

Also, for the shell portion, to improve the dispersibility of the cement, a copolymer of unsaturated monomers having carboxyl group and ethylenic double bond within the molecule are more preferably used. Examples of such unsaturated monomers having carboxyl group and ethylenic double bond within the molecule include acrylic acid, methacrylic acid, crotonic acid, maleic acid, fumaric acid, itaconic acid and half esters, half amides or salts thereof, but particularly preferably 0.1 to 5% by weight of methacrylic acid based on the unsaturated monomer of the above-mentioned shell portion is copolymerized.

Further, to improve the strength and the water resistance, the core portion and the shell portion preferably has a crosslinking agent and/or a reactive unsaturated monomer having a plurality of functionalities within one molecule.

Examples of such a crosslinking agent and a reactive unsaturated monomer include trimethylol-propane triacrylate, glycidyl acrylate, glycidyl methacrylate, bisphenol A polyoxyethylene adduct di(meth)acrylate, triallyl isocyanurate, and N-methylolacrylamide, but preferably, is copolymerized at a ratio of 0.1 to 5% by weight based on the unsaturated monomers of the core portion and the shell portion is used.

The polymer latex most preferably used in the present invention has core-shell type differentiated layer structures, wherein the weight ratio of the unsaturated monomers constituting the core portion and the shell portion is 35/65 to 90/10, and the weight composition of the unsaturated monomers in the core portion is:

| | |
|---|---|
| alkyl acrylate with alkyl group having 1 to 8 carbon atoms | 55 - 100% by weight |
| alkyl methacrylate with alkyl group having 1 to 4 carbon atoms | 0 - 45% by weight |
| crosslinking agent | 0 - 5% by weight |

and the weight composition of the unsaturated monomers in the shell portion is:

| | |
|---|---|
| alkyl acrylate with alkyl group having 1 to 8 carbon atoms | 5 - 49.9% by weight |
| alkyl methacrylate with alkyl group having 1 to 4 carbon atoms | 45 - 90% by weight |
| ethylenically unsaturated carboxylic acid or its salt | 0.1 - 5% by weight |
| crosslinking agent | 0 - 5% by weight |

as the essential components.

Such a polymer latex has remarkable effects in that it can lower the amount of water (W/C) used during the making-up of a polymer cement mortar and/or concrete, and further, that the polymer cement mortar and/or concrete can improve the durability, weathering resistance, and neutralization inhibition ability of the hardened product.

Also, to further enhance the water reduction effect and hardened product properties such as the leveling characteristic and solvent resistance, it is possible to add ethylenically unsaturated sulfonic acids or salts thereof, as represented by 2-acrylic acid amide-2-methylpropanesulfonic acid, styrenesulfonic acid or salts thereof, to the shell portion of the polymer latex with the core-shell type differentiated layer structure as described above, in an amount of 0.1% to 5% by weight based on the total unsaturated monomers, whereby the emulsion copolymerizability of the unsaturated monomers having an ethylenic double bond, crosslinking agents, and reactive unsaturated monomers is enhanced, to thus improve the intraparticulate crosslinking and interparticulate crosslinking during the film formation.

As the emulsifier for the emulsion polymerization of the polymer latex to be used in the present invention, the following anionic and nonionic emulsifiers may be employed.

Representative Examples of Anionic Emulsifiers

(1) Polyoxyalkylene alkyl aryl ether sulfate sulfonate:

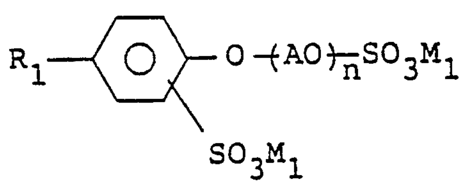

$R_1$: $C_6$ - $C_{20}$ alkyl group
A : $-CH_2CH_2-$ or

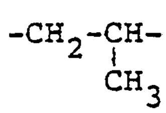

n : 0 - 100, preferably 5 - 40
$M_1$: mono- or divalent cation

(2) Polyoxyalkylene alkyl ether sulfate:

$R_1\text{-}O\text{-}(AO)_n\text{-}SO_3M_1$

wherein $R_1$, A, n and $M_1$ are the same as defined above.

(3) Polyoxyethylene alkyl aryl ether sulfate:

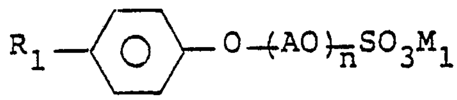

wherein $R_1$, A, n and $M_1$ are the same as defined above.

(4)

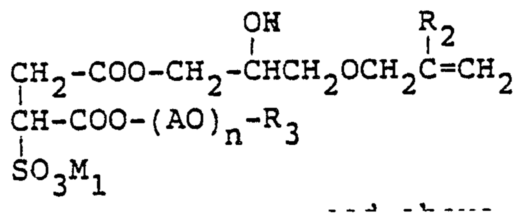

$M_1$, A, n: the same as defined above

$R_2$: hydrogen atom or methyl group

$R_3$: alkyl group, alkenyl group or alkyl group, or phenyl group having alkenyl group, fatty acid residue.

(5)

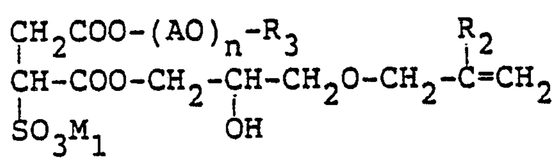

wherein $M_1$, A, n, $R_2$ and $R_3$ are the same as defined above.

(6)

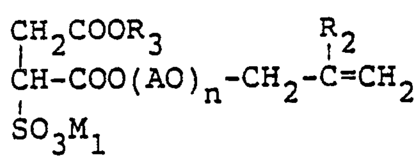

wherein $M_1$, A, n, $R_2$ and $R_3$ are the same as defined above.

(7)

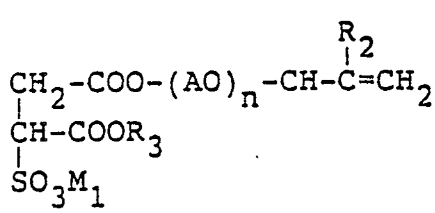

wherein $M_1$, A, n, $R_2$ and $R_3$ are the same as defined above.

(8)

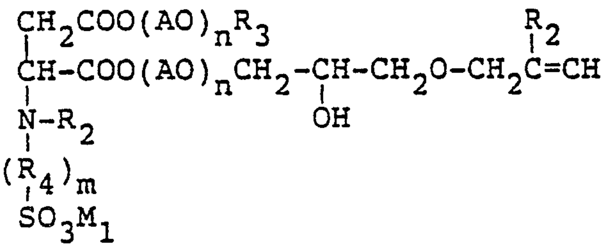

wherein $M_1$ , A, n, $R_2$ and $R_3$ are the same as defined above.
m : 0, 1
$R_4$: $-CH_2-$, $-CH_2CH_2-$ or phenyl group
(9)

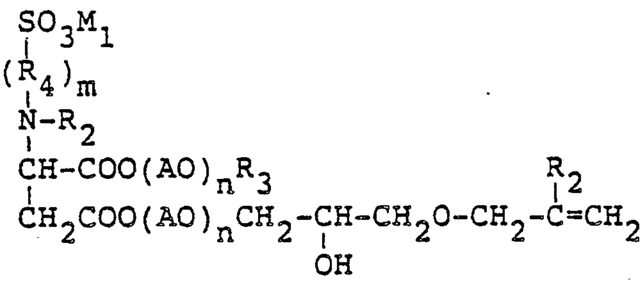

wherein $M_1$ , A, n, m, $R_2$ , $R_3$ and $R_4$ are the same as defined above.

Representative Examples of Nonionic Emulsifiers

(10) Polyoxyalkylene alkyl aryl ether:

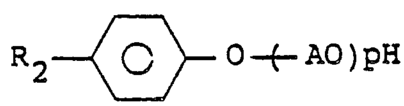

wherein p is 0 - 100, preferably 5 - 70, and $R_2$ and A are the same as defined above.
(11) Polyoxyalkylene alkyl ether:
$R_1-O(AO)pH$
wherein $R_1$ , A and p are the same as defined above.

These anionic emulsifiers and nonionic emulsifiers can be used alone or as a combination of two or more kinds thereof, but preferably one or more of emulsifiers having ethylene oxide and propylene oxide groups within the molecule are used. More preferably, the above compound (1) is used as the anionic emulsifier and one more of the above compound (10) or (11) as the nonionic emulsifier.

These emulsifiers may be used in an amount within the range of from 0.5 to 15% by weight, preferably from 1 to 10% by weight. As the polymerization initiator, it is possible to use hydrogen peroxide alone, a combination of hydrogen peroxide with a carboxylic acid such as tartaric acid, citric acid, and ascorbic acid, a combination of hydrogen peroxide with oxalic acid, sulfinic acid and salts thereof or oxyaldehydes, and water-soluble iron salts, a peroxide such as persulfate, percarbonate, and perborate, and a water-soluble azo type initiator such as 2,2′-azobis(2-aminodipropane) and salts thereof, 2,2′-azobis(N,N′-dimethyleneisobutylamidine) and salts thereof, and 4,4′-azobis(4-cyanovaleric acid) and salts thereof. In the preparation of the polymer latex to be used in the present invention, it is preferable to use 0.1 to 3% by weight of the above-mentioned azo type initiator based on the unsaturated monomer mixture.

The polymer latex to be used in the present invention can be prepared by using the unsaturated monomers, emulsifiers, and polymerization initiators as described above according to the emulsion polymerization method described below.

More specifically, the latex can be prepared by either the monomer dropwise addition method in which an emulsifier is dissolved in the aqueous phase, a part of the core portion unsaturated monomer is

solubilized, a polymerization initiator is placed, and subsequently, the core portion unsaturated monomer and the shell portion unsaturated monomer are added in that order, or the pre-emulsification method in which an emulsifier, a part of water, and the unsaturated monomers are premixed and emulsified to carry out an emulsion polymerization. But, to reduce the amount of polymer attached to a polymerization kettle or a stirring blade, which is a drawback of the emulsion polymerization, the pre-emulsification method is more preferable. Particularly, the point in which care must be taken when preparing the polymer latex having the core-shell type differentiated layer structure is that the polymerization of the core portion and the polymerization of the shell portion should be bound in block form, and therefore, preferably aging is performed for several minutes to several hours after the completion of the polymerization of the core portion. The polymer latex to be used in the present invention has a viscosity of 10 to 1000 cp (Brookfield viscometer) at a solid content of 40% by weight, has a good workability, and 50% or more of solids can be incorporated in the case of a low viscosity latex.

These polymer latices to be used in the present invention preferably have average particle sizes of less than 2000 nm, more preferably 500 nm or less, most preferably 200 nm or less. If the average particle size is 2000 nm or higher, the improvement of the strength, weathering resistance, water resistance, and neutralization inhibition of the cement mortar and/or concrete is unsatisfactory, and the amount used thereof becomes undesirably greater compared with those with smaller particle sizes.

The amount of the polymer latex mixed relative to the cement and/or concrete may be 0.3 to 12% by weight, preferably 0.5 to 10% by weight, as solids. An amount less than 0.3% by weight is not preferable from the standpoint of durability, water resistance, and neutralization inhibition. On the other hand, an amount over 12% by weight also is not preferable, because the compression strength of the cement-hardened product is lowered.

Also, in the present invention, to improve the flowability for a further improvement of the durability, preferably a sulfonic acid group containing polymer is formulated during the formulation kneading of a water curable inorganic material and the polymer latex. In this case, the sulfonic acid containing polymer may be also previously formulated in the polymer latex. Examples of the sulfonic acid containing polymer include lignin sulfonic acid salts, naphthalene-sulfonic acid formalin condensates, sulfonated melamine resins, polystyrenesulfonic acid salts, and copolymers thereof. Among them, polystyrenesulfonic acid salts are most preferable. As the counter-ion of these salts, alkali metals, alkaline earth metals, amines, and alkanolamines may be included. Particularly preferable counter-ions are amines, alkanolamines, and these are preferably used in amounts of an equivalent ratio or more, and a 3-fold ratio or less. The polystyrenesulfonic acid salts preferably have molecular weights of 3,000 to 100,000, more preferably 5,000 to 50,000. The amount of the polystyrenesulfonic acid formulated is preferably 0.01 to 4.0% by weight, more preferably 0.1% by weight to 2.0% by weight. An amount less than 0.01% by weight is not preferable with respect to the flowability and water reduction effect (the effect which reduces the amount of water formulated), and if it exceeds 4.0% by weight, a bleed-out of free water occurs, and further, the hardened product properties, including the water resistance, are undesirably lowered.

In the present invention, the durability can be further improved by using a combination of a body material such as fine particulate silica (fumed silica), fly ash, and blast furnace slug. Most preferably, fumed silica is used. Fumed silica also has the same effect when added in a powdery form, but when previously kneaded with the polymer latex of the present invention, there is no agglomeration of fumed silica, whereby both materials can be uniformly dispersed and the durability of the polymer cement can be markedly improved. The silica fume preferably has a primary particle size of 0.1 $\mu$m or less, a secondary particle size partially agglomerated of 1.0 $\mu$m to 100 $\mu$m, and a $SiO_2$ purity of 70% or higher.

Further, in the present invention, for a further improvement of the durability of reinforced cement mortar and/or concrete, a rust preventive can be effectively used in combination therewith. As the rust preventive which can be used in combination therewith, there may be included nitrites, chromates, silicates, organic phosphates, amines, alkylphenols, mercaptans, and nitro compounds, but by using the polymer latex of the present invention in combination with an organic phosphate type rust preventive, desirably a 1-hydroxyalkane-1,1-diphosphonate such as 1-hydroxyethane-1,1-diphosphonate, a remarkable durability (rust proof) improvement can be obtained at a lower concentration, compared with commercially available nitrites.

Also, in the present invention, if necessary, nonionic, anionic polymeric substances, coloration pigments, chelating agents, preservatives, pH controllers, plasticizers, high early strengthening agents, hardening retarders, electroconductive (antistatic) agents, body materials (clays), and reinforcing materials can be used as auxiliary additive components.

By using the additive of the present invention, the cement mortar and/or concrete obtained has an improved flexural strength and water resistance (water absorption inhibition), and further, the amount of

water used can be reduced to inhibit neutralization. Also, since the cement mortar and/or concrete of the present invention has a marked superior durability, the practical value thereof is extremely high.

Therefore, extremely efficient performances can be exhibited when the additive for cement mortar and/or concrete of the present invention is used when producing inner walls and water wall base materials of structures, adhesives for tiling, joint fillers for tiling, floor materials, lining materials for preventing corrosion, such as ACL reinforcing steel corrosion, water reservoir tanks, pools, silos, water-proof materials such as base materials for tennis courts, deck covering materials such as for ship decks, pedestrian bridge floors, and bridge decks, acid resistant Hume pipe, special concrete moldings for GRC products, semi-rigid roads for bus terminals, tunnels, highways, and factories, sprayed protective coating materials of mortar and concrete bodies using in combination with inorganic or organic fibers, such as glass fiber, carbon fiber, polyester fiber, and polyvinyl alcohol fiber, electroconductive coating materials using in combination with carbon fiber, metal powder (flake), electromagnetic wafer shielding materials, super-high strength moldings, heavy anticorrosive paints of ship ballast tanks, mortar floating repairing materials, slant-stretched bridge wire materials, chemical moldings such as cosmetic bottles, and interlockings.

## Examples

The present invention is further described by way of Examples. The methods of preparing the polymer latex and the evaluation methods common to the respective Examples are summarized below.

### (1) Preparation of Polymer Latex:

i) Sample No. 1

Into a reaction vessel equipped with a thermometer, a stirrer, a reflux condenser, a nitrogen introducing unit and a dropping funnel, 6.0 parts by weight of the emulsifier of No. 1 in Table 1 and 150 parts by weight of water were charged to dissolve the emulsifier, followed by an internal replacement with nitrogen gas. Separately, for the unsaturated monomer mixtures shown in No. 1 in Table 2, first 90.0 parts by weight of the unsaturated monomer mixture for the core portion were prepared, 7.5 parts by weight of which were added to the above-mentioned reaction vessel, followed by emulsification at 50 °C for 10 minutes. Subsequently, after elevation of the temperature to 60 °C, 2,2′-azobis(N,N′-dimethyleneisobutylamidine) hydrochloride (VA-044) was dissolved in 50.0 parts by weight of water to 9.0 x $10^{-3}$ mole/liter-aqueous phase, the solution was added to the above-mentioned reaction vessel, and immediately thereafter, the remainder of the unsaturated monomer was continuously added dropwise to the reaction mixture over 18 minutes to carry out the polymerization at 60 °C.

After completion of the dropwise addition of the unsaturated monomer for the core portion, aging was effected at 60 °C for 10 minutes, and subsequently, 60 parts by weight of the unsaturated monomer mixture for the shell portion were continuously added dropwise over 12 minutes to carry out the polymerization at 60 °C. After completion of the dropwise addition of the unsaturated monomer, aging was effected at 60 °C for 90 minutes, followed by cooling to room temperature to prepare Sample No. 1.

ii) Samples No. 2 - No. 7, No. 13 - No. 18, No. 20 - No. 21

Using the emulsifiers in Table 1 and the compositions of unsaturated monomers in Table 2, at the core-shell ratios shown in Tables 4, 5, 6 and 7, these samples were prepared according to Sample No. 1. Here, the dropwise addition time of the unsaturated monomers of the core portion and the shell portion was made 30 minutes in total, divided in proportion to the weight ratio.

iii) Samples No. 8 - No. 10

These samples were prepared according to Sample No. 1 except for the use of the emulsifier No. 1 in Table 1 and the unsaturated monomer mixtures No. 10 -No. 12 in Table 2, and the total amount was continuously added dropwise over 30 minutes to form a uniform latex.

iv) Sample No. 11

After the preparation thereof, the uniform polymer latices of Samples No. 9 and No. 10 were mixed and stirred to a weight ratio of 60/40 to be uniformalized.

v) Sample No. 19

Cl Emulsion (Dainippon Ink Kagaku), which is a commercially available acrylic polymer latex for polymer cement, was used as such.

vi) Sample No. 12

No polymer latex addition (plain)

Table 1

| Composition of Emulsifier | | | | |
|---|---|---|---|---|
| | | Amount of emulsifier charged (parts by weight) | | |
| Emulsifier | Emulsifier No. | No. 1 | No. 2 | No. 3 |
| Ammonium stearyl-2-hydroxy-3-allyloxy-1-propylsuccinate sulfonate | | 0 | 3.0 | 0 |
| Polyoxyethylene nonyl phenyl ether ( $\bar{p}$ = 10) | | 0 | 2.0 | 0 |
| Sodium dodecylbenzene sulfonate | | 0 | 1.0 | 0 |
| Polyoxyethylene nonyl phenyl ether ( $\bar{p}$ = 30) | | 4.0 | 0 | 0 |
| Polyoxyethylene nonyl phenyl ether ( $\bar{p}$ = 40) | | 0 | 0 | 6.0 |
| Polyoxyethylene nonyl phenyl ether sulfate sulfonate sodium ( $\bar{p}$ = 9) | | 2.0 | 0 | 0 |

Table 2 Unsaturated monomer composition of sample polymer latex

| Unsaturated monomer No. | | Unsaturated monomer composition: Butyl acrylate | Ethyl acrylate | Meth-acrylic acid | Methyl meth-acrylate | Triallyl iso-cyanurate | Bisphenol A ethylene oxide 30 mole adduct dimethacrylate | Glycidyl meth-acrylate | Tri-methylol-propane triacrylate | Total parts by weight of core and shell | Glass transition temperature* Tg (°C) |
|---|---|---|---|---|---|---|---|---|---|---|---|
| Amount charged (parts by weight) | | | | | | | | | | | |
| No. 1 | Core | 63.0 (70.0) | 18.0 (20.0) | 2.7 (3.0) | 2.7 (3.0) | - | 1.8 (2.0) | - | 1.8 (2.0) | 90 | -42 |
| | Shell | 15.6 (26.0) | 4.5 (7.5) | 1.8 (3.0) | 35.7 (59.5) | - | 1.2 (2.0) | - | 1.2 (2.0) | 60 | 34 |
| No. 2 | Core | 41.0 (45.6) | 11.7 (13.0) | 2.7 (3.0) | 31.0 (34.4) | - | 1.8 (2.0) | - | 1.8 (2.0) | 90 | -5 |
| | Shell | 22.9 (38.2) | 6.1 (10.2) | 1.8 (3.0) | 26.8 (44.7) | - | 1.2 (2.0) | - | 1.2 (2.0) | 60 | 9 |
| No. 3 | Core | 41.0 (45.6) | 11.7 (13.0) | 2.7 (3.0) | 31.0 (34.4) | - | 1.8 (2.0) | - | 1.8 (2.0) | 90 | -5 |
| | Shell | 11.7 (19.5) | 3.3 (5.5) | 1.8 (3.0) | 40.8 (68.0) | - | 1.2 (2.0) | - | 1.2 (2.0) | 60 | 50 |
| No. 4 | Core | 84.0 (70.0) | 24.0 (20.0) | 3.6 (3.0) | 3.6 (3.0) | - | 2.4 (2.0) | - | 2.4 (2.0) | 120 | -42 |
| | Shell | 7.8 (26.0) | 2.3 (7.7) | 0.9 (3.0) | 17.8 (59.3) | - | 0.6 (2.0) | - | 0.6 (2.0) | 30 | 34 |

Table 2 Unsaturated monomer composition of sample polymer latex (Continued)

| Unsaturated monomer No. | | Butyl acrylate | Ethyl acrylate | Meth-acrylic acid | Methyl meth-acrylate | Triallyl iso-cyanurate | Bisphenol A ethylene oxide 30 mole adduct dimethacrylate | Glycidyl meth-acrylate | Tri-methylol-propane triacrylate | Total parts by weight of core and shell | Glass transition temperature* Tg (°C) |
|---|---|---|---|---|---|---|---|---|---|---|---|
| | | Unsaturated monomer composition | | | | | | | | | |
| Amount charged (parts by weight) | | | | | | | | | | | |
| No. 5 | Core | 36.7 (69.8) | 10.5 (20.0) | 1.6 (3.0) | 1.6 (3.0) | - | 1.1 (2.1) | - | 1.1 (2.1) | 52.6 | -42 |
| | Shell | 25.3 (26.0) | 7.3 (7.5) | 2.9 (3.0) | 57.9 (59.4) | - | 2.0 (2.1) | - | 2.0 (2.1) | 97.4 | 34 |
| No. 6 | Core | - | 81.0 (90.0) | 2.7 (3.0) | 2.7 (3.0) | - | 1.8 (2.0) | 1.8 (2.0) | - | 90 | -17 |
| | Shell | - | 20.1 (33.5) | 1.8 (3.0) | 35.7 (59.5) | - | 1.2 (2.0) | 1.2 (2.0) | - | 60 | 49 |
| No. 7 | Core | 81.0 (90.0) | - | 2.7 (3.0) | 2.7 (3.0) | 1.8 (2.0) | 1.8 (2.0) | - | - | 90 | -48 |
| | Shell | 20.1 (33.5) | - | 1.8 (3.0) | 35.7 (59.5) | 1.2 (2.0) | 1.2 (2.0) | - | - | 60 | 30 |
| No. 8 | Core | 83.7 (93.0) | - | 2.7 (3.0) | - | 1.8 (2.0) | 1.8 (2.0) | - | - | 90 | -51 |
| | Shell | 20.1 (33.5) | - | 1.8 (3.0) | 35.7 (59.5) | 1.2 (2.0) | 1.2 (2.0) | - | - | 60 | -30 |

Table 2 Unsaturated monomer composition of sample polymer latex (Continued)

| Unsaturated monomer No. | | Unsaturated monomer composition | | | | | | | | | |
|---|---|---|---|---|---|---|---|---|---|---|---|
| | | Butyl acrylate | Ethyl acrylate | Meth-acrylic acid | Methyl meth-acrylate | Triallyl iso-cyanurate | Bisphenol A ethylene oxide 30 mole adduct dimethacrylate | Glycidyl meth-acrylate | Tri-methylol-propane triacrylate | Total parts by weight of core and shell | Glass transition temperature* Tg (°C) |
| Amount charged (parts by weight) | | | | | | | | | | | |
| No. 9 | Core | 84.6 (94.0) | | 2.7 (3.0) | 2.7 (3.0) | - | - | - | - | 90 | -48 |
| | Shell | 22.5 (37.5) | | 1.8 (3.0) | 35.7 (59.5) | - | - | - | - | 60 | 25 |
| No. 10 | Uniform | 78.9 (52.6) | 22.5 (15.0) | 4.1 (2.7) | 39.1 (26.1) | - | 2.7 (1.8) | - | 2.7 (1.8) | 150 | -17 |
| No. 11 | Uniform | 105 (70.0) | 30 (20.0) | 4.5 (3.0) | 4.5 (3.0) | - | 3.0 (2.0) | - | 3.0 (2.0) | 150 | -42 |
| No. 12 | Uniform | 39.0 (26.0) | 11.3 (7.5) | 4.5 (3.0) | 89.2 (59.5) | - | 3.0 (2.0) | - | 3.0 (2.0) | 150 | 34 |
| No. 13 | Core | 99.6 (70.0) | 28.3 (20.0) | 4.3 (3.0) | 4.3 (3.0) | - | 2.9 (2.0) | - | 2.9 (2.0) | 142.3 | -42 |
| | Shell | 2.0 (26.0) | 0.6 (7.8) | 0.2 (2.6) | 4.5 (58.4) | - | 0.2 (2.6) | - | 0.2 (2.6) | 7.7 | 33 |

Table 2 Unsaturated monomer composition of sample polymer latex (Continued)

| Unsaturated monomer No. | | Unsaturated monomer composition | | | | | | | | | |
|---|---|---|---|---|---|---|---|---|---|---|---|
| | | Butyl acrylate | Ethyl acrylate | Meth-acrylic acid | Methyl meth-acrylate | Triallyl iso-cyanurate | Bisphenol A ethylene oxide 30 mole adduct dimethacrylate | Glycidyl meth-acrylate | Tri-methylol-propane triacrylate | Total parts by weight of core and shell | Glass transition temperature* Tg (°C) |
| Amount charged (parts by weight) | | | | | | | | | | | |
| No. 14 | Core | 5.3 (69.7) | 1.5 (19.7) | 0.2 (2.6) | 0.2 (2.6) | - | 0.2 (2.6) | - | 0.2 (2.6) | 7.6 | -43 |
| | Shell | 37.0 (26.0) | 10.7 (7.5) | 4.3 (3.0) | 84.6 (59.4) | - | 2.9 (2.0) | - | 2.9 (2.0) | 142.4 | 34 |

The numerals in the brackets show the respective unsaturated monomer in the core or shell portion in % by weight.

* Calculated value in proportion to weight.

(vi) Confirmation of differentiated layer formation of polymer latex

The formation of a differentiated layer polymer latex was confirmed by the following method.

A half of the amount of the polymer latex of the sample immediately after the completion of the addition and aging of the unsaturated monomer of the core portion of Sample No. 1 was withdrawn, stirred as such at 60 °C to continue aging for 45 minutes, then cooled to form a polymer latex of the core portion. To the remaining half was further dropwise added half of the amount of the unsaturated monomer, and after completion of the dropwise addition, the mixture was aged at 60 °C for one hour and cooled to form a core-shell polymer latex. The particle sizes of the respective polymer latex were measured by a submicron particle size analyzer (Coulter Model N4 Model, Coulter Electronics). The results are shown in Table 3.

Table 3

| Polymer latex | Weight average particle size | Number of particle size distribution peaks |
|---|---|---|
| Core portion | 84 nm | Single |
| Core-shell . | 99 nm | Single |

The core-shell formed polymer latex was found to have a greater average particle size than a latex with only the core portion, and the value thereof is approximately equal to the calculated value (98 nm) determined from the weight ratio of the unsaturated monomers of the core portion and the shell portion, and the particle distribution had a single peak without change, and thus it is clear that a differentiated layer formation has been formed.

(2) Glass transition temperature (Tg)

The glass transition temperature (Tg) of the polymer latex was determined from the Tg's of butyl acrylate, ethyl acrylate, methyl methacrylate, methacrylic acid, which are the main monomers, from the following formula:

$$\frac{1}{Tg(T)} = \frac{A}{Tg(T)\ \text{Butyl acrylate}} + \frac{B}{Tg(T)\ \text{Ethyl acrylate}} + \frac{C}{Tg(T)\ \text{Methyl methacrylate}} + \frac{D}{Tg(T)\ \text{Methacrylic acid}}$$

A, B, C, D: weight ratio of the respective components (A + B + C + D = 1.0).

In the above formula, the Tg(T) of butyl acrylate = 218 °K, Tg(T) of ethyl acrylate = 249 °K, the Tg(T) of methyl methacrylate = 378 °K, and the Tg(T) of methacrylic acid = 501 °K were employed.

(3) Crosslinkability

An amount of 30 g of the polymer latex prepared as 40% by weight of solids was cast uniformly onto a

glass plate 12 cm x 14 cm, and dried in air at 25 °C. The film thus obtained was cut to 2 cm x 4 cm, dipped in a laboratory dish filled with benzene at 20 °C, for 48 hours, and the swelling degree and solubility of the film were evaluated according to the following standards.
o : substantially equal to the film area (2 cm x 4 cm) before dipping in benzene, or slightly swollen;
Δ : swelling degree great and film shape damaged;
x : film completely dissolved in benzene to become uniformly liquefied.

(4) Performance evaluation

The polymer latex prepared as described above were evaluated by using same as the mixing material for polymer cement.

| i) Preparation of polymer cement | |
|---|---|
| Common Portland cement | 1 kg |
| Mountain sand (obtained in Kisarazu) | 2 kg |
| Defoaming agent (nonionic) | 1 g |

An amount 150 g (60 g of solids) of the polymer latex and a necessary amount of water to a flow value (JISR5201) of 180 ± 10 were added, kneaded by a paddle mixer, and provided for a measurement of the kneading properties. Further, the kneaded product was placed in a frame (4.0 x 4.0 x 16.0 cm) and two days later demolded, and after curing, provided for an evaluation of the hardened product.

For comparison, Sample No. 10 (plain) prepared according to the same method except for containing the polymer latex was employed.

ii) Polymer cement evaluation:

According to the method described below, the kneading properties and performances of the hardened product were evaluated.

(1) Kneading properties:
Unit volume weight: JIS A1116
W/C: Amount of water used/cement weight x 100
(2) Hardened product performances:
Flexural strength test: JIS R5201
Compression strength test: JIS R5201
Attachment strength test: JIS A6915
Water absorption test: JIS A1404
Abrasion test: JIS A1451
Drying shrinkage test: JIS A1129
Neutralization test: A sample 4 x 4 x 16 cm was cured at 20 °C and at 80% RH for one week, left to stand in an autoclave pressurized at 1 $kg/cm^2$ with a $CO_2$ concentration of 5% for 3 months, the sample was cut at the center, a 1% alcoholic phenolphthalein solution was sprayed on the cut surface, the area at the portion at which the red color disappeared was measured, and the neutralization ratio was determined by the ratio of that portion to the total sectional area.

Example 1

The effect of a differentiated layer formation of the polymer latex in the polymer-cement system was investigated, and the results are shown in Table 4. Samples No. 1 - 7 are Examples of the present invention, and No. 8 - 12 are Comparative examples. In Samples No. 1 - 7, wherein the polymer latex was formed into differentiated layers, the kneading properties, water absorption, abrasion resistance, neutralization ratio, and drying shrinkage, which are indices of a highly durable polymer cement, were small and good. Further, the flexural strength and attachment strength were high and good, and the lowering of the compression strength was small.

On the other hand, in Samples No. 8 - 10 using uniform emulsions, Sample No. 11 prepared merely by mixing the uniform polymer latex (Sample No. 9, 10) by using unsaturated monomers of the core portion and the shell portion of Sample No. 1, although the physical properties may be partly improved, all of the above various physical properties cannot be satisfied at the same time.

Table 4

| | | Example | | | | | | | Comparative Example | | | | |
|---|---|---|---|---|---|---|---|---|---|---|---|---|---|
| Sample No. | | 1 | 2 | 3 | 4 | 5 | 6 | 7 | 8 | 9 | 10 | 11 | 12 |
| Emulsifier No. | | 1 | 2 | 3 | 1 | 1 | 1 | 1 | 1 | 1 | 1 | 1 | - |
| Unsaturated monomer No. | | 1 | 1 | 1 | 6 | 7 | 8 | 9 | 10 | 11 | 12 | 11, 12 | - |
| Core/shell ratio | | 60/40 | 60/40 | 60/40 | 60/40 | 60/40 | 60/40 | 60/40 | Uniform | Uniform | Uniform | Uniform No.9/No.10 - 60/40 | No addition (plain) |
| Tg (°C) | Core portion | -42 | -42 | -42 | -17 | -48 | -51 | -48 | -17 | -42 | 34 | -42, 34 | - |
| | Shell portion | 34 | 34 | 34 | 49 | 30 | 30 | 25 | | | | | |
| Weight average particle ratio (nm) | | 99 | 62 | 94 | 93 | 91 | 86 | 107 | 83 | 85 | 91 | - | - |
| Crosslinkability | | o | o | o | o | o | o | x | o | o | o | o | - |
| Unit volume weight (kg/l) | | 2.14 | 2.14 | 2.13 | 2.13 | 2.11 | 2.12 | 2.11 | 1.94 | 1.96 | 2.14 | 2.05 | 2.15 |
| W/C | | 36 | 36 | 36 | 37 | 38 | 38 | 38 | 41 | 42 | 37 | 40 | 43 |
| Strength ($kg \cdot f/cm^2$) | Flexural | 107 | 108 | 105 | 104 | 102 | 100 | 98 | 77 | 75 | 77 | 77 | 74 |
| | Compression | 419 | 419 | 413 | 409 | 412 | 407 | 407 | 315 | 308 | 398 | 370 | 455 |
| | Attachment | 11.9 | 12.1 | 12.0 | 11.8 | 11.8 | 12.0 | 10.3 | 9.3 | 9.5 | 11.9 | 10.7 | 11.6 |

Table 4 (Continued)

| | Example | | | | | | | Comparative Example | | | | |
|---|---|---|---|---|---|---|---|---|---|---|---|---|
| Water absorption (%) | 2.3 | 2.5 | 2.5 | 2.2 | 2.3 | 2.1 | 2.2 | 6.2 | 6.3 | 5.5 | 5.9 | 10.5 |
| Abrasion resistance (mm) | 0.15 | 0.16 | 0.15 | 0.13 | 0.15 | 0.15 | 0.15 | 0.19 | 0.19 | 0.15 | 0.17 | 0.17 |
| Neutralization ratio (%) | 42 | 43 | 44 | 49 | 44 | 43 | 45 | 89 | 88 | 59 | 74 | 70 |
| Drying shrinkage (%) | -0.092 | -0.094 | -0.092 | -0.092 | -0.091 | -0.090 | -0.093 | -0.106 | -0.105 | -0.096 | -0.103 | -0.112 |

Example 2

The effects of the Tg were investigated when the core/shell ratio was made constant at 60/40 by using the emulsion No. 1 in Table 1. The results are shown in Table 5.

Table 5

| | | Example | | |
|---|---|---|---|---|
| Sample No. | | 1 | 13 | 14 |
| Emulsifier No. | | 1 | 1 | 1 |
| Unsaturated monomer No. | | 1 | 2 | 3 |
| Core/shell ratio | | 60/40 | 60/40 | 60/40 |
| Tg (°C) | Core portion | -42 | -5 | -5 |
| | Shell portion | 34 | 9 | 50 |
| Weight average particle size (nm) | | 99 | 88 | 83 |
| Crosslinkability | | o | o | o |
| Unit volume weight (kg/l) | | 2.14 | 2.13 | 2.11 |
| W/C | | 36 | 38 | 35 |
| Strength ($kg \cdot f/cm^2$) | Flexural | 107 | 103 | 112 |
| | Compression | 419 | 408 | 415 |
| | Attachment | 11.9 | 11.5 | 12.3 |
| Water absorption (%) | | 2.3 | 2.6 | 2.3 |
| Abrasion resistance (mm) | | 0.15 | 0.14 | 0.15 |
| Neutralization ratio (%) | | 42 | 45 | 41 |
| Drying shrinkage (%) | | -0.092 | -0.094 | -0.091 |

Example 3

The performances as a polymer cement were evaluated by using the emulsifier No. 1 in Table 1 and the polymer latex in which the unsaturated monomer compositions of the core portion and the shell portion are the same as the unsaturated monomer compositional ratio No. 1 shown in Table 2, and the ratio of the core portion to the shell portion was varied as shown in Table 6.

The results are shown in Table 6.

Samples No. 1, 15 and 16 are Examples of the present invention and Samples No. 17, 18 are Comparative examples. Further, for comparison, a commercially available acrylic polymer latex for polymer cement was used as Sample No. 19.

If the ratio of the core portion is too high, a layer destruction occurs to lower the various performances (Sample No. 17), and if the ratio of the shell portion is too high, it is difficult to realize the differentiated layer formation (Sample No. 18). By selecting an adequate core-shell ratio (Samples No. 1, 15, 16), it can be understood that the various performances can be greatly improved.

Table 6

| | | Example | | | Comparative Example | | |
|---|---|---|---|---|---|---|---|
| Sample No. | | 1 | 15 | 16 | 17 | 18 | 19 |
| Emulsifier No. | | 1 | 1 | 1 | 1 | 1 | - |
| Unsaturated monomer No. | | 1 | 4 | 5 | 13 | 14 | - |
| Core/shell ratio | | 60/40 | 80/20 | 35/65 | 95/5 | 5/95 | commercial product |
| Tg (°C) | Core portion | -42 | -42 | -42 | -42 | -43 | - |
| | Shell portion | 34 | 34 | 34 | 33 | 34 | - |
| Weight average particle size (nm) | | 99 | 92 | 85 | 79 | 81 | 2083 |
| Crosslinkability | | o | o | o | o | o | Δ |
| Unit volume weight (kg/l) | | 2.14 | 2.14 | 2.12 | 1.95 | 2.12 | 2.07 |
| W/C | | 36 | 35 | 35 | 42 | 37 | 40 |
| Strength ($kg \cdot f/cm^2$) | Flexural | 107 | 101 | 109 | 81 | 79 | 89 |
| | Compression | 419 | 400 | 425 | 331 | 406 | 394 |
| | Attachment | 11.9 | 11.7 | 11.7 | 9.7 | 11.8 | 11.0 |

Table 6 (Continued)

| | Example | | | Comparative Example | | |
|---|---|---|---|---|---|---|
| Water absorption (%) | 2.3 | 2.7 | 2.7 | 6.0 | 5.3 | 4.8 |
| Abrasion resistance (mm) | 0.15 | 0.16 | 0.14 | 0.18 | 0.15 | 0.16 |
| Neutralization ratio (%) | 42 | 44 | 50 | 78 | 56 | 56 |
| Drying shrinkage (%) | -0.092 | -0.096 | -0.092 | -0.104 | -0.096 | -0.122 |

Example 4

Using the emulsifier No. 1 in Table 1 and the unsaturated monomers in Table 2, the influences of polyfunctional crosslinking agents on the polymer cement performances were investigated. The results are shown in Table 7.

Table 7

| | | Example | | |
|---|---|---|---|---|
| Sample No. | | 1 | 20 | 21 |
| Emulsifier No. | | 1 | 2 | 3 |
| Unsaturated monomer No. | | 1 | 6 | 7 |
| Core/shell ratio | | 60/40 | 60/40 | 60/40 |
| Tg (°C) | Core portion | -42 | -17 | -48 |
| | Shell portion | 34 | 49 | 30 |
| Weight average particle size (nm) | | 99 | 74 | 102 |
| Crosslinkability | | o | o | o |
| Unit volume weight (kg/l) | | 2.14 | 2.12 | 2.11 |
| W/C | | 36 | 37 | 37 |
| Strength ($kg \cdot f/cm^2$) | Flexural | 107 | 105 | 103 |
| | Compression | 419 | 411 | 415 |
| | Attachment | 11.9 | 11.6 | 11.7 |
| Water absorption (%) | | 2.3 | 2.4 | 2.3 |
| Abrasion resistance (mm) | | 0.15 | 0.15 | 0.16 |
| Neutralization ratio (%) | | 42 | 48 | 45 |
| Drying shrinkage (%) | | -0.092 | -0.091 | -0.092 |

Example 5

Using Sample No. 1 as the base, the effect of a combined use of silica fume as the body material, calcium polystyrenesulfonate, and aluminum 1-hydroxyethane-1,1-diphosphonate and calcium nitrite as rust preventives was investigated. The rust preventive effect was measured according to JIS A6205, and the evaluation was made by a visual judgement according to the following standards.

◎ : no generation of rust
o : rust slightly generated
Δ : rust generated in about half of the area
x : rust generated in 70 to 80% of the area
xx : wholly rusted.

The results are shown in Table 8.

Samples No.s, No. 22 - No. 25 are Examples of the present invention, and Sample No. 12 is a Comparative Example.

By using silica fume and calcium polystyrenesulfonate in combination with the polymer latex having the differentiated layer structure, the water absorption and neutralization inhibition, which are measures of a higher durability, can be further improved, and the flexural strength also can be raised. Also, in a combined use with rust preventives which inhibit a generation of rust, which is a primary factor of mortar (concrete) degeneration, the generation of rust can be inhibited without reducing the effects of the present invention, such as water absorption, neutralization ratio, and flexural strength. Particularly, compared with calcium nitrite, which is included in most commercially available rust preventives, it can be understood that a

marked rust preventive effect can be exhibited by using it in combination an organic phosphoric type rust preventive such as 1-hydroxyethane-1,1-phosphonate.

Table 8

| | Sample No. | Drug used in combination | Flexural strength (kg•f/$cm^2$) | Water absorption (%) | Neutralization degree (%) | Rust generation |
|---|---|---|---|---|---|---|
| Example | 1 | None | 107 | 2.3 | 42 | Δ |
| | 22 | Fumed silica 3 wt% | 125 | 2.0 | 35 | Δ |
| | 23 | Calcium polystyrene sulfonate 0.7 wt% | 121 | 1.8 | 36 | Δ |
| | 24 | Aluminum 1-hydroxyethane-1,1-diphosphonate 0.2 wt% | 107 | 2.3 | 43 | o |
| | 25 | Calcium nitrite 2 wt% | 104 | 2.5 | 42 | o - Δ |
| Comparative Example | 12 | Plain | 74 | 10.5 | 70 | x - xx |

Example 6

In the shell portion of the unsaturated monomer No. 1, 32.6 parts of methyl methacrylate, 1.3 parts of N-methylolacrylamide and 1.8 parts of 2-acrylic acid amide-2-methylpropanesulfonic acid were used in place of 35.7 parts by weight of methyl methacrylate, and an emulsion polymerization was carried out according to the preparation of the polymer latex of Example 1, (i) Sample No. 1, to obtain a polymer latex of Sample No. 21.

The properties and performances of this polymer latex were as follows; weight average particle size: 107 mm, crosslinkability: o, unit volume weight: 2.16 kg/lifter, W/C: 33, flexural strength 109 kgf/cm$^2$, compression strength 423 kgf/cm$^2$, attachment strength 11.5 kgf/cm$^2$, water absorption: 2.5%, abrasion: 0.16 mm, neutralization ratio: 44%, drying shrinkage: -0.090.

Also, a sample identical to a sample used for an evaluation of the compression strength was dipped in a desiccator filled with a 5% aqueous sulfuric acid, a 5% aqueous acetic acid, a 2.5% aqueous hydrochloric acid, a 5% aqueous sodium hydroxide, and kerosene, and thereafter, the penetration depth (mm) after an elapse of 7 days and 14 days was measured for an evaluation of the chemical resistance. The results are shown in Table 9.

Table 9

| Sample | Chemical Dipping time | Sulfuric acid | Acetic acid | Hydrochloric acid | Sodium hydroxide | Kerosene |
|---|---|---|---|---|---|---|
| Plain | 7 days<br>14 days | 1.37<br>2.40 | 2.77<br>3.40 | 4.40<br>4.58 | 0.19<br>0.22 | 0.55<br>0.65 |
| No. 1* | 7 days<br>14 days | 0.81<br>1.88 | 1.68<br>2.65 | 3.65<br>4.06 | 0.05<br>0.08 | 0.05<br>0.19 |
| No. 21* | 7 days<br>14 days | 0.67<br>1.78 | 1.50<br>2.61 | 3.40<br>3.89 | 0.03<br>0.05 | 0.03<br>0.08 |

* Polymer cement hardened product when using polymer latex of Samples No. 1 and No. 21.

From the results in Table 9, by using a combination of ethylenically unsaturated sulfonic acids or salts in the shell portion of the core-shell differentiated layer polymer latex, it is clear that the chemical resistance of the polymer cement mortar hardened product, as well as the kneading properties and performances of the hardened product, can be improved.

## Claims

1. An additive for cement mortar and/or concrete comprising a polymer latex, as an essential component, containing polymer fine particles having a core-shell type differentiated layer structure, the weight ratio of the unsaturated monomers constituting the core portion and the shell portion being 90/10 to 10/90.

2. An additive for cement mortar and/or concrete as claimed in claim 1, wherein the shell portion of said polymer fine particle has a glass transition point (Tg) of 0°C to 50°C, and the core portion has a Tg of 10°C or lower.

3. An additive for cement mortar and/or concrete as claimed in claim 1, wherein said polymer fine particle has a crosslinked structure.

4. An additive for cement mortar and/or concrete comprising a polymer latex, as an essential component, containing polymer fine particles having a core-shell type differentiated layer structure, the weight ratio of the unsaturated monomers constituting the core portion and the shell portion being 35/65 to 90/10, and the weight composition of the unsaturated monomers in the core portion being:

| | |
|---|---|
| alkyl acrylate with alkyl group having 1 to 8 carbon atoms | 55 - 100% by weight |
| alkyl methacrylate with alkyl group having 1 to 4 carbon atoms | 0 - 45% by weight |
| crosslinking agent | 0 - 5% by weight |

and the weight composition of the unsaturated monomers in the shell portion being:

| | |
|---|---|
| alkyl acrylate with alkyl group having 1 to 8 carbon atoms | 5 - 49.9% by weight |
| alkyl methacrylate with alkyl group having 1 to 4 carbon atoms | 45 - 90% by weight |
| ethylenically unsaturated carboxylic acid or its salt | 0.1 - 5% by weight |
| crosslinking agent | 0 - 5% by weight |

5. An additive for cement mortar and/or concrete as claimed in claim 4, wherein the shell portion of said polymer fine particle has a glass transition point (Tg) of 0 to 50 °C, and the core portion has a Tg of 10 °C or lower.

6. An additive for cement mortar and/or concrete as claimed in claim 4, wherein said polymer fine particle has a crosslinked structure.